# EUROPÄISCHE PATENTSCHRIFT

(11) **EP 1 119 810 B1**
(45) Veröffentlichungstag und Bekanntmachung des Hinweises auf die Patenterteilung: **18.12.2002**
(21) Anmeldenummer: 99955763.0
(22) Anmeldetag: 22.09.1999
(51) Int. Cl.: G06F 11/14

(54) **SPEICHERPROGRAMMIERBARE STEUERUNG MITTELS DATENVERWALTUNG ÜBER NETZRECHNER UND VERFAHREN ZUM BETRIEB EINER SPEICHERPROGRAMMIERBAREN STEUERUNG**
PROGRAMMABLE CONTROLLER WHICH OPERATES BY MEANS OF DATA MANAGEMENT USING NETWORK COMPUTERS AND METHOD FOR OPERATING A PROGRAMMABLE CONTROLLER
COMMANDE A PROGRAMME ENREGISTRE ASSUREE PAR GESTION DE DONNEES PAR L'INTERMEDIAIRE D'ORDINATEURS DE RESEAU ET PROCEDE PERMETTANT D'ACTIONNER UNE COMMANDE A PROGRAMME ENREGISTRE

(30) Priorität: 05.10.1998 DE 19845764
(43) Veröffentlichungstag der Anmeldung: 01.08.2001
(73) Patentinhaber: SIEMENS AKTIENGESELLSCHAFT, 80333 München (DE)
(72) Erfinder: BLUMENSTOCK, Werner, D-91085 Weisendorf (DE)
(86) Internationale Anmeldenummer: DE9903030
(87) Internationale Veröffentlichungsnummer: WO00020970

(56) Entgegenhaltungen:
- EP-A- 0 284 924
- DE-A- 4 408 544

## Beschreibung

Die Erfindung betrifft eine mit einem Speicher zur Speicherung von Anwenderdaten, Anwenderprogrammen, Konfigurationsdaten und/oder eines Betriebssystems.

Die Erfindung betrifft weiter ein System mit einer derartigen speicherprogrammierbaren Steuerung sowie ein Verfahren zum Betrieb einer speicherprogrammierbaren Steuerung, wobei in einem Speicher der speicherprogrammierbaren Steuerung Anwenderdaten, Anwenderprogramme, Konfigurationsdaten und/oder ein Betriebssystem gespeichert.

Speicherprogrammierbare Steuerungen kommen im Bereich der Automatisierungstechnik zum Einsatz. Die speicherprogrammierbare Steuerung weist dabei in der Regel einen Speicher auf, auf dem sämtliche für den Betrieb der speicherprogrammierbaren Steuerungen erforderlichen Daten, wie beispielsweise Betriebssystem, Anwenderprogramme sowie Andwenderdaten gespeichert werden. Durch den Betreiber der speicherprogrammierbaren Steuerung können Änderungen innerhalb dieser Daten vorgenommen werden, was beispielsweise bei einem Störungsfall zu einer unübersichtlichen Historie bezüglich aktueller Versionen von Anwenderprogrammen und Daten etc. führt.

Aus DE-A-44 08 544 ist ein Verfahren zur automatischen Erst- und Update-Installation von Software für datenverarbeitende Geräte bekannt. Dabei wird ein Zielrechner durch ein Netzwerk mit einer Versorgungsanlage verbunden und eine von einem Kunden bestellte Software von der Versorgungsanlage installiert.

Der Erfindung liegt die Aufgabe zugrunde, insbesondere in einem Störungsfall eine schnelle und sichere Inbetriebnahme einer speicherprogrammierbaren Steuerung zu erreichen.

Diese Aufgabe wird durch die Kombination der in den Ansprüchen 1, 4 bzw. 6 angegebenen Merkmale gelöst.

Der Erfindung liegt die Erkenntnis zugrunde, dass eine zentrale Datenverwaltung leichter archivierbar und verfügbar ist, als eine dezentrale mit innerhalb jeder speicherprogrammierbaren Steuerung separat vorhandenen Daten. Aus diesem Grund ist die speicherprogrammierbare Steuerung (SPS) als sogenannte Net-SPS ausgebildet, d.h. die speicherprogrammierbare Steuerung enthält lediglich eine Steuerungsvorrichtung, die die jeweils gültigen Programme und Daten von einem zentralen Rechner des Automatisierungssystems über eine Netzwerkverbindung lädt. Im Speicher der speicherprogrammierbaren Steuerung sind somit lediglich Arbeitskopien der jeweiligen Anwenderdaten, Anwenderprogramme, Konfigurationsdaten und/oder des Betriebssystems gespeichert. Sollen diese Daten geändert werden, so erfolgt eine Speicherung, d.h. Korrektur dieser Programme und Daten nicht am Ort der speicherprogrammierbaren Steuerung selbst, sondern lediglich im zentralen Rechner. Bei einem Neustart der speicherprogrammierbaren Steuerung bzw. bei einem Baugruppentausch etc. werden die jeweils geänderten, d.h. jeweils aktuellen Daten und Programme wiederum in die speicherprogrammierbare Steuerung geladen. Hierdurch ergeben sich insbesondere in größeren Automatisierungsanlagen erhebliche Vorteile. So kann ein Update des Betriebssystems zentral, d.h. sehr einfach durchgeführt werden. Eine umständliche Neukonfiguration der einzelnen speicherprogrammierbaren Steuerungen entfällt. Zudem sind die aktuellen Versionen der Anwenderprogramme und der Daten zentral verfügbar und können somit auch leicht archiviert und bei Störungsfällen für eine Fehlerbeseitigung verwendet werden. Die erfindungsgemäße speicherprogrammierbare Steuerung ist weiter in der Lage, beispielsweise nach einem Hardwaredefekt und einem entsprechenden Ersatz der defekten Baugruppe automatisch die jeweils aktuellen Programme und Daten vom zentralen Rechner zu laden. Eine umständliche Neuprogrammierung der speicherprogrammierbaren Steuerung entfällt.

Eine zentrale und übersichtliche Verwaltung der jeweiligen Anwenderprogramme und sonstigen Daten kann dadurch erfolgen, daß die Steuerungsvorrichtung der speicherprogrammierbaren Steuerung zur Steuerung einer Speicherung von Änderungen von Anwenderprogrammen und/oder Anwenderdaten auf dem Zentralrechner des Netzwerks vorgesehen ist.

Ein einfacher und sicherer Austausch der speicherprogrammierbaren Steuerung oder von Teilkomponenten derselben im Störungsfall sowie eine zuverlässige Wiederinbetriebnahme kann dadurch sichergestellt werden, daß die Steuerungsvorrichtung der speicherprogrammierbaren Steuerung zum automatischen Laden von aktuellen Programmen und/oder Daten im Störungsfall der speicherprogrammierbaren Steuerung vorgesehen ist.

Im folgenden wird die Erfindung anhand der in den Figuren dargestellten Ausführungsbeispiele näher beschrieben und erläutert.

Es zeigen:
- FIG 1: ein Blockschaltbild eines Ausführungsbeispiels eines vernetzten Automatisierungssystems mit zentraler Datenverwaltung für die speicherprogrammierbaren Steuerungen und
- FIG 2: eine schematische Darstellung für den Prozeßablauf des Datentransfers zwischen Zentralrechner und speicherprogrammierbarer Steuerung.

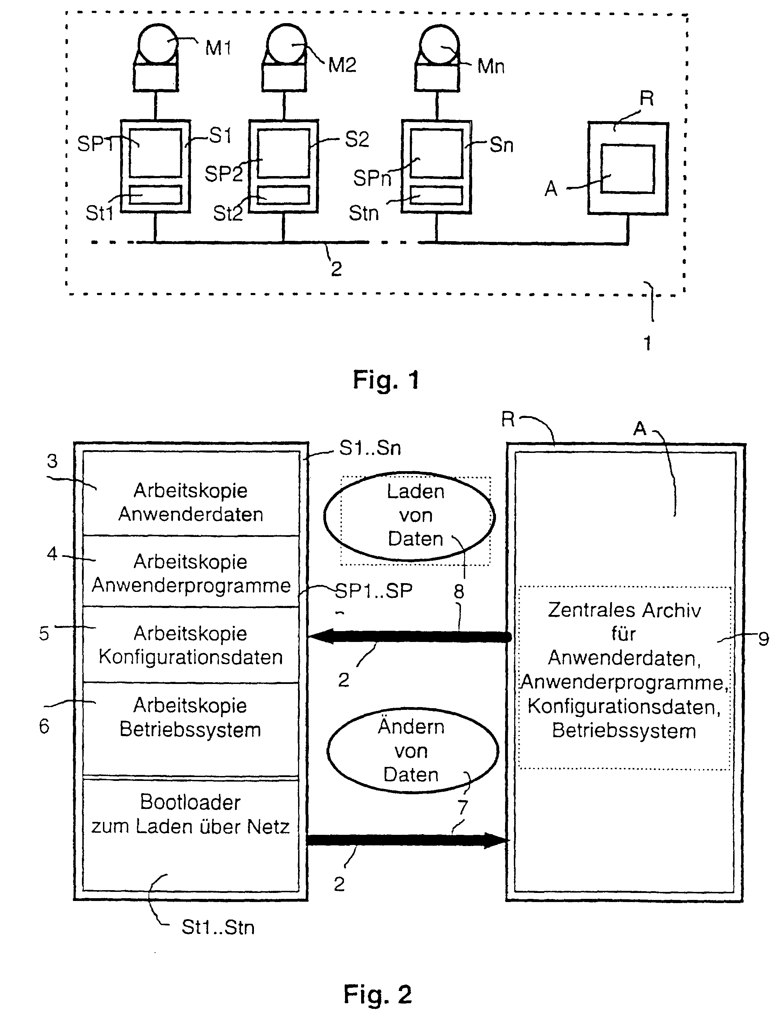

FIG 1 zeigt ein Blockschaltbild eines Ausführungsbeispiels eines vernetzten Automatisierungssystems 1. Das Automatisierungssystem 1 weist einen zentralen Rechner R mit einem zentralen Archiv A auf. Der zentrale Rechner R ist über eine Netzwerkverbindung 2 mit einer Vielzahl von speicherprogrammierbaren Steuerungen S1..Sn verbunden. Die speicherprogrammierbaren Steuerungen S1..Sn enthalten jeweils eine Steuerungsvorrichtung Stl..Stn sowie jeweils Speicher SP1..SPn. Die speicherprogrammierbaren Steuerungen S1..Sn sind bei dem in FIG 1 dargestellten Ausführungsbeispiel mit Motoren M1..Mn verbunden.

Die Besonderheit des in FIG 1 dargestellten Automatisierungssystems besteht darin, daß die speicherprogrammierbaren Steuerungen S1..Sn als sogenannte Net-SPS (= Netz - speicherprogrammierbare Steuerungen) ausgebildet sind. Dabei ist im Speicher SP1..SPn der speicherprogrammierbaren Steuerungen S1..Sn lediglich jeweils eine Arbeitskopie der für den Betrieb der speicherprogrammierbaren Steuerungen S1..Sn erforderlichen Programme und Daten gespeichert. Die Originaldaten sind im Archivspeicher A des zentralen Rechners R des Automatisierungssystems 1 zentral gespeichert. Das Laden der jeweiligen Programme und Daten über die Netzverbindung 2 erfolgt mit Hilfe der Steuerungsvorrichtungen St1..Stn der speicherprogrammierbaren Steuerungen S1..Sn. Die Steuerungsvorrichtung St1..Stn ist somit als sogenannter Bootloader ausgebildet und dient dem Laden von Programmen und Daten über die Netzverbindung 2. Beim Einschalten einer speicherprogrammierbaren Steuerung S1..Sn werden falls erforderlich das Betriebssystem der speicherprogrammierbaren Steuerung, die Konfigurationsdaten, das Anwenderprogramm und die Anwenderdaten automatisch oder wahlweise auch auf Bedienerinitiative von dem zentralen Rechner R, der somit als Fileserver dient, geladen. Korrekturen im Anwenderprogramm und den Anwenderdaten werden immer an der zentralen Stelle, d.h. im zentralen Rechner R gespeichert. Im Speicher SP1..SPn der speicherprogrammierbaren Steuerungen S1..Sn befindet sich lediglich eine Arbeitskopie der Programme und der Daten. Durch die Struktur des gezeigten Automatisierungssystems 1, d.h. durch die Ausbildung der speicherprogrammierbaren Steuerungen S1..Sn als sogenannte Net-SPS können Updates des Betriebssystems in einfacher Weise erfolgen. Die aktuellen Versionen von Anwenderprogrammen und Daten sind zentral im Archivspeicher A der zentralen Recheneinheit R verfügbar und können somit leicht archiviert werden. Bei einer Störung sowie bei einem Hardwaredefekt und einem gegebenenfalls erforderlichen Austausch einer Baugruppe einer speicherprogrammierbaren Steuerung S1..Sn werden automatisch die jeweils aktuellen Programme und Daten vom Archivspeicher A des zentralen Rechners R geladen. Eine umständliche neue Inbetriebnahme und neue Konfiguration der speicherprogrammierbaren Steuerung S1..Sn wird somit überflüssig.

FIG 2 zeigt eine schematische Darstellung für den Prozeßablauf des Datentransfers zwischen einem Zentralrechner R und einer speicherprogrammierbaren Steuerung S1..Sn für eine Netzwerkverbindung 2. Der zentrale Rechner R enthält in seinem Archivspeicher A die zentralen Archivdaten 9 für Anwenderdaten, Anwenderprogramme, Konfigurationsdaten sowie das bzw. die erforderlichen Betriebssysteme. Die speicherprogrammierbare Steuerung S1..Sn weist eine Speichervorrichtung SP1..SPn sowie eine Steuerungsvorrichtung St1..Stn auf. Im Speicher SP1..SPn sind jeweils Arbeitskopien von Anwenderdaten 3, von Anwenderprogrammen 4, von Konfigurationsdaten 5 sowie von Betriebssystem 6 gespeichert.

Der Datentransfer über die Netzverbindung 2 vom Zentralrechner R zur speicherprogrammierbaren Steuerung S1..Sn erfolgt über Prozeßschritte 7,8. Im Prozeßschritt 8 erfolgt ein Laden der im Archivspeicher A gespeicherten Daten beispielsweise nach einem Kaltstart oder nach einem Baugruppentausch der speicherprogrammierbaren Steuerung S1..Sn. Im Prozeßschritt 7 ist symbolisiert, daß über die Netzverbindung 2 eine Korrektur von Programmen und Daten erfolgen kann, wobei die Speicherung derartiger Änderungen immer jeweils lediglich im Archivspeicher A des Zentralrechners R und nicht im Speicher SP1..SPn der speicherprogrammierbaren Steuerung S1..Sn erfolgt. Die Steuerung des Ladens sowie der Speicherung im Änderungsfall von Programmen und Daten erfolgt mit Hilfe der Steuerungsvorrichtung St1..Stn der speicherprogrammierbaren Steuerung S1..Sn.

Zusammenfassend betrifft die Erfindung somit eine speicherprogrammierbare Steuerung, die insbesondere in einer größeren Automatisierungsanlage besonders vorteilhaft zum Einsatz kommt sowie ein Verfahren zum Betrieb einer speicherprogrammierbaren Steuerung S1..Sn. Die speicherprogrammierbaren Steuerungen S1..Sn sind über ein Netzwerk 2 mit einem Zentralrechner R des Automatisierungssystems vernetzt. Auf dem Zentralrechner sind sämtliche Anwenderdaten 3, Anwenderprogramme 4, Konfigurationsdaten 5 und die Betriebssysteme 6 der speicherprogrammierbaren Steuerungen S1..Sn gespeichert. In der speicherprogrammierbaren Steuerung S1..Sn sind lediglich Arbeitskopien dieser Daten gespeichert. Insbesondere bei einem Ausfall von Komponenten der speicherprogrammierbaren Steuerung S1..Sn werden die Anwenderdaten 3, die Anwenderprogramme 4, die Konfigurationsdaten 5 und/oder das Betriebssystems 6 über das Netzwerk 2 von dem Zentralrechner R geladen. Hierdurch können Updates des Betriebssystems sehr einfach zentral durchgeführt werden. Außerdem sind die jeweils aktuellen Versionen der Anwenderprogramme zentral verfügbar und können so leicht archiviert werden. Weiter können in einem Störungsfall jederzeit die benötigten Daten auch automatisch geladen werden.

## Patentansprüche

1. Speicherprogrammierbare Steuerung (S1..Sn) mit einem Speicher (SP1..SPn) zur Speicherung von Anwenderdaten (3), Anwenderprogrammen (4), Konfigurationsdaten (5) und/oder eines Betriebssystems (6), wobei die speicherprogrammierbare Steuerung (S1..Sn) zur Steuerung von Vorrichtungen (M1..Mn) eines Automatisierungssystems (1) und zum Betrieb an einem Netzwerk (2) vorgesehen ist, und mit einer Steuerungsvorrichtung (St1..Stn) zum Laden der Anwenderdaten (3), der Anwenderprogramme (4), der Konfigurationsdaten (5) und/oder des Betriebssystems (6) über das Netzwerk (2) von einem Zentralrechner (R) als Arbeitskopien insbesondere bei einem Ausfall der speicherprogrammierbaren Steuerung (S1..Sn) und/oder bei einem Austausch der speicherprogrammierbaren Steuerung (S1..Sn), wobei Änderungen der Anwenderdaten (3), der Anwenderprogramme (4), der Konfigurationsdaten (5) und/oder des Betriebssystems (6) im Zentralrechner (R) gespeichert werden und wobei die Steuerungsvorrichtung (St1..Stn) der speicherprogrammierbaren Steuerung (S1..Sn) zur Steuerung einer Speicherung von Änderungen von Anwenderprogrammen (4) und/oder Anwenderdaten (3) auf dem Zentralrechner (R) des Netzwerks (2) vorgesehen ist.

2. Speicherprogrammierbare Steuerung nach Anspruch 1,
**dadurch gekennzeichnet,**
**dass** die Anwenderdaten (3), die Anwenderprogramme (4), die Konfigurationsdaten (5) und/oder das Betriebssystem (6) beim Einschalten einer speicherprogrammierbaren Steuerung (S1..Sn) automatisch oder wahlweise auch auf Bedienerinitiative vom Zentralrechner (R) geladen werden.

3. Speicherprogrammierbare Steuerung nach einem der Ansprüche 1 oder 2,
**dadurch gekennzeichnet,**
**dass** die Steuerungsvorrichtung (St1..Stn) der speicherprogrammierbaren Steuerung (S1..Sn) zum automatischen Laden von aktuellen Programmen und/oder Daten (3, 4, 5, 6) nach einem Ersatz einer defekten Baugruppe der speicherprogrammierbaren Steuerung (S1..Sn) vorgesehen ist.

4. Verfahren zum Betrieb einer speicherprogrammierbaren Steuerung (S1..Sn), wobei in einem Speicher (SP1..SPn) der speicherprogrammierbaren Steuerung (S1..Sn) Anwenderdaten (3), Anwenderprogramme (4), Konfigurationsdaten (5) und/oder ein Betriebssystem (6) als Arbeitskopien von auf einem zentralen Rechner (R) gespeicherten Anwenderdaten, Anwenderprogrammen, Konfigurationsdaten und/oder eines Betriebssystems gespeichert werden, bei dem insbesondere bei einem Ausfall und/oder einem Austausch von Komponenten der speicherprogrammierbaren Steuerung (S1..Sn) die Anwenderdaten (3), die Anwenderprogramme (4), die Konfigurationsdaten (5) und/oder das Betriebssystems (6) über das Netzwerk (2) von dem zentralen Rechner (R) geladen und Änderungen von Anwenderprogrammen (4) und/oder Anwenderdaten (3) gesteuert durch die Steuerungsvorrichtung (St1..Stn) auf dem Zentralrechner (R) des Netzwerks (2) gespeichert werden.

5. Verfahren nach Anspruche 4,
**dadurch gekennzeichnet,**
**dass** aktuelle Programmen und/oder Daten (3, 4, 5, 6) nach einem Ersatz einer defekten Baugruppe der speicherprogrammierbaren Steuerung (S1..Sn) automatisch vom Zentralrechner (R) in den Speicher (SP1..SPn) der speicherprogrammierbaren Steuerung (S1..Sn) geladen werden.

6. Automatisierungssystem mit mindestens einer speicherprogrammierbaren Steuerung (S1..Sn) mit einem Speicher (SP1..SPn) zur Speicherung von Anwenderdaten (3), Anwenderprogrammen (4), Konfigurationsdaten (5) und/oder eines Betriebssystems (6), wobei die speicherprogrammierbare Steuerung (S1..Sn) zur Steuerung von Vorrichtungen (M1..Mn) eines Automatisierungssystems (1) und zum Betrieb an einem Netzwerk (2) vorgesehen ist, und mit einer Steuerungsvorrichtung (St1..Stn) zum Laden der Anwenderdaten (3), der Anwenderprogramme (4), der Konfigurationsdaten (5) und/oder des Betriebssystems (6) über das Netzwerk (2) von einem Zentralrechner (R) als Arbeitskopien insbesondere bei einem Ausfall der speicherprogrammierbaren Steuerung (S1..Sn) und/oder bei einem Austausch der speicherprogrammierbaren Steuerung (S1..Sn), wobei Änderungen der Anwenderdaten (3), der Anwenderprogramme (4), der Konfigurationsdaten (5) und/oder des Betriebssystems (6) im Zentralrechner (R) gespeichert werden und wobei die Steuerungsvorrichtung (St1..Stn) der speicherprogrammierbaren Steuerung (S1..Sn) zur Steuerung einer Speicherung von Änderungen von Anwenderprogrammen (4) und/oder Anwenderdaten (3) auf dem Zentralrechner (R) des Netzwerks (2) vorgesehen ist.

## Claims

1. Memory-programmable controller (S1..Sn) with a memory (SP1..SPn) for storing user data (3), application programs (4), configuration data (5) and/or an operating system (6), whereby the memory-programmable controller (S1..Sn) is provided for controlling devices (M1..Mn) of an automation system (1) and for operation in a network (2), and with a control device (St1..Stn) for loading the user data (3), application programs (4), configuration data (5) and/or the operating system (6) by way of the network (2) from a central computer (R) as working copies, in particular in the event of a failure of the memory-programmable controller (S1..Sn) and/or in the event of a replacement of the memory-programmable controller (S1..Sn), whereby changes to the user data (3), application programs (4), configuration data (5) and/or the operating system (6) are stored in the central computer (R) and whereby the control device (St1..Stn) of the memory-programmable controller (S1..Sn) is provided for controlling storage of changes to application programs (4) and/or user data (3) on the central computer (R) of the network (2).

2. Memory-programmable controller according to Claim 1, **characterised in that** the user data (3), application programs (4), configuration data (5) and/or the operating system (6) are loaded when a memory-programmable controller (S1..Sn) is switched on, either automatically or, alternatively, at the initiative of the operator from the central computer (R).

3. Memory-programmable controller according to one of Claims 1 or 2, **characterised in that** the control device (St1..Stn) of the memory-programmable controller (S1..Sn) is provided for automatic loading of current programs and/or data (3, 4, 5, 6) following a replacement of a defective module of the memory-programmable controller (S1..Sn).

4. Method for operating a memory-programmable controller (S1..Sn), whereby in a memory (SP1..SPn) of the memory-programmable controller (S1..Sn) user data (3), application programs (4), configuration data (5) and/or an operating system (6) are stored as working copies of user data, application programs, configuration data and/or an operating system stored on a central computer (R), in which in particular in the event of a failure and/or a replacement of components of the memory-programmable controller (S1..Sn), the user data (3), the application programs (4), the configuration data (5) and/or the operating system (6) are loaded from the central computer (R) by way of the network (2), and changes to application programs (4) and/or user data (3) are stored on the central computer (R) of the network (2) under the control of the control device (St1..Stn).

5. Method according to Claim 4, **characterised in that** current programs and/or data (3, 4, 5, 6) are automatically loaded from the central computer (R) into the memory (SP1..SPn) of the memory-programmable controller (S1..Sn) following replacement of a defective module of the memory-programmable controller (S1..Sn).

6. Automation system with at least one memory-programmable controller (S1..Sn) with a memory (SP1..SPn) for storing user data (3), application programs (4), configuration data (5) and/or an operating system (6), whereby the memory-programmable controller (S1..Sn) is provided for controlling devices (M1..Mn) of an automation system (1) and for operation in a network (2), and with a control device (St1..Stn) for loading the user data (3), application programs (4), configuration data (5) and/or the operating system (6) by way of the network (2) from a central computer (R) as working copies, in particular in the event of a failure of the memory-programmable controller (S1..Sn) and/or in the event of a replacement of the memory-programmable controller (S1..Sn), whereby changes to the user data (3), the application programs (4), the configuration data (5) and/or the operating system (6) are stored in the central computer (R) and whereby the control device (St1..Stn) of the memory-programmable controller (S1..Sn) is provided for controlling storage of changes to application programs (4) and/or user data (3) on the central computer (R) of the network (2).

## Revendications

1. Commande à programme enregistré (S1 à Sn) avec une mémoire (SP1 à SPn) pour la mémorisation de données d'application (3), de programmes d'application (4), de données de configuration (5) et/ou d'un système d'exploitation (6), la commande à programme enregistré (S1 à Sn) étant prévue pour la commande de dispositifs (M1 à Mn) d'un système automatisé (1) et pour le fonctionnement sur un réseau (2), et avec un dispositif de commande (St1 à Stn) qui est prévu pour le chargement des données d'application (3), des programmes d'application (4), des données de configuration (5) et/ou du système d'exploitation (6) sous forme de copies de travail depuis un ordinateur central (R) et par l'intermédiaire du réseau (2), notamment dans le cas d'une panne de la commande à programme enregistré (S1 à Sn) et/ou dans le cas d'un échange de la commande à programme enregistré (S1 à Sn), des modifications des données d'application (3), des programmes d'application (4), des données de configuration (5) et/ou du système d'exploitation (6) étant mémorisées dans l'ordinateur central (R) et le dispositif de. commande (St1 à Stn) de la commande à programme enregistré (S1 à Sn) étant prévu pour la commande d'une mémorisation de modifications de programmes d'application (4) et/ou de données d'application (3) dans l'ordinateur central (R) du réseau (2).

2. Commande à programme enregistré selon la revendication 1,
**caractérisée par le fait que** les données d'application (3), les programmes d'application (4), les données de configuration (5) et/ou le système d'exploitation (6) sont chargés depuis l'ordinateur central (R), automatiquement ou optionnellement sur l'initiative de l'utilisateur, lors du branchement d'une commande à programme enregistré (S1 à Sn).

3. Commande à programme enregistré selon l'une des revendications 1 ou 2,
**caractérisée par le fait que** le dispositif de commande (St1 à Stn) de la commande à programme enregistré (S1 à Sn) est prévu pour le chargement automatique de programmes et/ou de données actuels (3, 4, 5, 6) après un remplacement d'un module défectueux de la commande à programme enregistré (S1 à Sn).

4. Procédé pour le fonctionnement d'une commande à programme enregistré (S1 à Sn), des données d'application (3), des programmes d'application (4), des données de configuration (5) et/ou un système d'exploitation (6) étant mémorisés dans une mémoire (SP1 à SPn) de la commande à programme enregistré (S1 à Sn) en tant que copies de travail de données d'application, de programmes d'application, de données de configuration et/ou d'un système d'exploitation mémorisés dans un ordinateur central (R), dans lequel les données d'application (3), les programmes d'application (4), les données de configuration (5) et/ou le système d'exploitation (6) sont chargés depuis l'ordinateur central (R) par l'intermédiaire du réseau (2) notamment dans le cas d'une panne et/ou d'un échange de composants de la commande à programme enregistré (S1 à Sn) et dans lequel des modifications de programmes d'application (4) et/ou de données d'application (3) sont mémorisées, suivant la commande du dispositif de commande (St1 à Stn), dans l'ordinateur central (R) du réseau (2).

5. Procédé selon la revendication 4,
**caractérisé par le fait que**, après un remplacement d'un module défectueux de la commande à programme enregistré (S1 à Sn), des programmes et/ou données actuels (3, 4, 5, 6) sont chargés automatiquement depuis l'ordinateur central (R) dans la mémoire (SP1 à SPn) de la commande à programme enregistré (S1 à Sn).

6. Système automatisé comportant au moins une commande à programme enregistré (S1 à Sn) avec une mémoire (SP1 à SPn) pour la mémorisation de données d'application (3), de programmes d'application (4), de données de configuration (5) et/ou d'un système d'exploitation (6), la commande à programme enregistré (S1 à Sn) étant prévue pour la commande de dispositifs (M1 à Mn) d'un système automatisé (1) et pour le fonctionnement sur un réseau (2), et avec un dispositif de commande (St1 à Stn) qui est prévu pour le chargement des données d'application (3), des programmes d'application (4), des données de configuration (5) et/ou du système d'exploitation (6) sous forme de copies de travail depuis un ordinateur central (R) et par l'intermédiaire du réseau (2), notamment dans le cas d'une panne de la commande à programme enregistré (S1 à Sn) et/ou dans le cas d'un échange de la commande à programme enregistré (S1 à Sn), des modifications des données d'application (3), des programmes d'application (4), des données de configuration (5) et/ou du système d'exploitation (6) étant mémorisées dans l'ordinateur central (R) et le dispositif de commande (St1 à Stn) de la commande à programme enregistré (S1 à Sn) étant prévu pour la commande d'une mémorisation de modifications de programmes d'application (4) et/ou de données d'application (3) dans l'ordinateur central (R) du réseau (2).
